# EUROPEAN PATENT SPECIFICATION

(11) **EP 3 410 174 B1**
(45) Date of publication and mention of the grant of the patent: **01.09.2021**
(21) Application number: 17204684.9
(22) Date of filing: 30.11.2017
(51) Int. Cl.: G02B 27/01

(54) **HEAD MOUNT DEVICE HAVING IMPACT ABSORBING WALLS**
KOPFMONTIERTE VORRICHTUNG MIT STOSSABSORBIERENDEN WÄNDEN
DISPOSITIF MONTÉ SUR LA TÊTE PRÉSENTANT DES PAROIS D'ABSORPTION D'IMPACT

(30) Priority: 31.05.2017 US 201715610438; 20.09.2017 WO PCT/US2017/052461
(43) Date of publication of application: 05.12.2018
(73) Proprietor: Facebook Technologies, LLC, Menlo Park, CA 94025 (US)
(72) Inventor: MILLER, Robin Michael, Menlo Park, CA California 94025 (US); ALDRICH, James, Menlo Park, CA California 94025 (US); HAMMERSTEIN, Julian, Menlo Park, CA California 94025 (US); HEWKO, Adam, Menlo Park, CA California 94025 (US); TEMPEL, Mark Alan, Menlo Park, CA California 94025 (US); SULLIVAN, Joseph Patrick, Menlo Park, CA California 94025 (US)
(74) Representative: Murgitroyd & Company

(56) References cited:
- WO-A1-2016/182974
- CN-A- 106 019 602
- CN-A- 106 646 871
- US-A1- 2015 253 574
- US-A1- 2017 102 546
- US-A1- 2017 102 549

## Description

### BACKGROUND

The present disclosure relates to a head-mounted display ("HMD"), and specifically, to a metal frame in a HMD.

Head-mounted displays (HMDs) may be used to present augmented and/or virtual information to a user. For example, a virtual reality (VR) headset can be used to simulate virtual environments. HMDs are used in a variety fields, some of these include gaming, engineering, medicine, and aviation. To perform these operations, HMDs can include various internal components as well as sensors such as cameras and inertial measurement units. Such internal components and sensors may be susceptible to damage when dropped or subject to external impact.

CN 106019602 discloses a head-mounted display comprising a wearing head band module and a head display module, the head display module comprises an optical module, and the wearing head band module comprises a connecting structure connected with a head display shell, so that the head display module wearing angle is convenient to adjust; the optical module comprises a module shell, a left lens cone mechanism, a right lens cone mechanism, a left sight distance adjusting mechanism, a left pupil distance adjusting mechanism, a right sight distance adjusting mechanism and a right pupil distance adjusting mechanism, wherein the left lens cone mechanism and the right lens cone mechanism are arranged in the module shell, the left sight distance adjusting mechanism and the left pupil distance adjusting mecha-nism are used for adjusting the sight distance and the pupil distance of the left lens cone mechanism, and the right sight distance adjusting mechanism and the right pupil distance adjusting mechanism are used for adjusting the sight distance and the pupil distance of the right lens cone mechanism, wherein the head-mounted display equipment, the sight distance and the pupil distance of the left lens cone mechanism and the right lens cone mechanism can be adjusted separately, and the head display module wearing angle can be independently adjusted.

WO2016182974 A1 discloses a head mounted neuro-monitoring device for monitoring electrical brain activity associated with visual field of a user comprising a sensor unit to acquire electroencephalogram (EEG) signals from one or more electroencephalograph (EEG) sensors arranged to acquire EEG signals from the head of a user, and a portable electronic device frame capable of housing a removable portable electronic device with a visual display unit that is positioned in front of the user's eyes to present visual stimuli, in which the visual stimuli is configured to evoke visual-event-related responses (VERPs) in the EEG signals exhibited by the user and acquired by the sensor unit.

US 2017/0102546 A1 discloses a head mounted display system, comprising a display housing; one or more display devices in the display housing; a first lens and a second lens coupled to the one or more display devices in the display housing; an input device on the display housing comprising a control member con-figured to move relative to the display housing between a first position and a second position; and a lens movement assembly operatively coupled to the first and second lenses and the input device, wherein the lens movement assembly is configured to move the first lens relative to the second lens in response to movement of the control member between the first and second positions to adjust a lateral distance between the first and second lenses within the display housing.

US 2015/253574 A1 discloses a modular virtual reality headset system that can be customized and assembled by the user, comprising a frame assembly comprising two or more cooperating removable and interchangeable components; a dock defined by the frame assembly and configured to receive a mobile device; and a lens module configured to removably attach to the frame assembly, wherein the lens module comprises one or more removable and interchangeable lenses.

US 2017 /102549 A1 discloses a head mount display device comprising a housing comprising a closed front side and a back side having a pair of openings; a pair of optic modules arranged horizontally behind the front side in the pair of openings, each optic module including a display provided in the housing; a barrel having one end arranged in the housing and an opposite end exposed outside the housing via the opening; a lens fixed to the barrel; a focus adjuster configured to adjust a distance between the barrel and the display; and a horizontal adjuster configured to guide horizontal movement of the optic module with respect to the housing; and a display frame coupled to the back side of the display. The display frame includes a barrel accommodating part configured to surround a circumference of the barrel; and a head fixing unit configured to fix the housing to a user's head, wherein the focus adjuster and the horizontal adjuster provided in one optic module of the pair of optic modules is operable independently from the focus adjuster and the horizontal adjuster provided in the other optical module in the pair of optic modules, and wherein the focus adjuster changes a position of the barrel arranged in the barrel accommodating part.

CN106646871 A discloses a head-mounted display with a cooling system, which comprises a shell. The shell is internally provided with a PCB and a display module; the shell comprises an inner side surface close to eyes of a wearer and forming relatively-closed space with the eyes of the wearer and an outer side surface opposite to the inner side surface; the shell is also internally provided with a cooling system; the cooling system at least comprises an air inlet and an air outlet arranged on the shell and a fan arranged in the shell; and the fan is electrically connected with the circuit on the PCB. Through arranging the cooling system in the head-mounted display, when the circuit on the PCB works, the fan is driven to work at the same time, air flow circulation is thus formed between air inside the shell and air outside the shell, cold air outside the shell is sucked in the shell from the air inlet and is then discharged from the air outlet, heat in the shell is taken away, and the purpose of reducing the working temperature of the head-mounted display is thus achieved.

### SUMMARY

The invention is defined by the annexed independent claim. Embodiments result from the dependent claims and the following description.

Embodiments relate to a head-mounted display ("HMD"), comprising metal frame for protecting components of the HMD from impact. The metal frame includes a front surface facing a front cover of the HMD and a rear surface facing a display assembly. The rear surface of the metal frame contains a raised wall that is spaced apart from and extends along an edge of the display assembly to protect the display assembly. When the HMD is dropped or subject to external force, the wall may deform but keep the display assembly intact.

Embodiments according to the invention are in particular defined in the attached claims directed to a head-mounted display.

### BRIEF DESCRIPTION OF DRAWINGS

FIG. 1 is a perspective view of a head-mounted display (HMD) according to one embodiment.
FIG. 2 is a perspective view of the HMD of FIG. 1 with a front cover removed, according to one embodiment.
FIG. 3 is a perspective rear view of a metal frame and display protection shells of the HMD of FIG. 1 , according to one embodiment.
FIG. 4 is an enlarged view of the top rear corner of the metal frame and display assembly of the HMD, according to one embodiment.
FIG. 5 is an enlarged view of the bottom rear corner of the metal frame and the display assembly of the HMD, according to one embodiment.
FIG. 6 is an exploded perspective view of the metal frame of the HMD, according to one embodiment.
FIG. 7 is a rear view of the metal frame of the HMD according to one embodiment.
FIG. 8 is a perspective diagram of a bracket for protecting a camera, according to one embodiment.

### DETAILED DESCRIPTION

In the following description of embodiments, numerous specific details are set forth in order to provide more thorough understanding. However, note that the embodiments may be practiced without one or more of these specific details. In other instances, well-known features have not been described in detail to avoid unnecessarily complicating the description.

Embodiments are described herein with reference to the figures where like reference numbers indicate identical or functionally similar elements. Also in the figures, the left most digit of each reference number corresponds to the figure in which the reference number is first used.

Embodiments relate to a metal frame in a head-mounted display (HMD) that is structured to absorb impact and protect components of the HMD. The metal frame has a wall that is spaced away from a protection shell securing a display panel in the HMD. When the HMD is dropped or subject to external force, the wall may deform but keep the protection shell intact. Moreover, the metal frame has protruding ridges and brackets that surround outward facing cameras on the HMD. If the HMD is dropped, the protruding ridges and brackets can provide protection to the cameras.

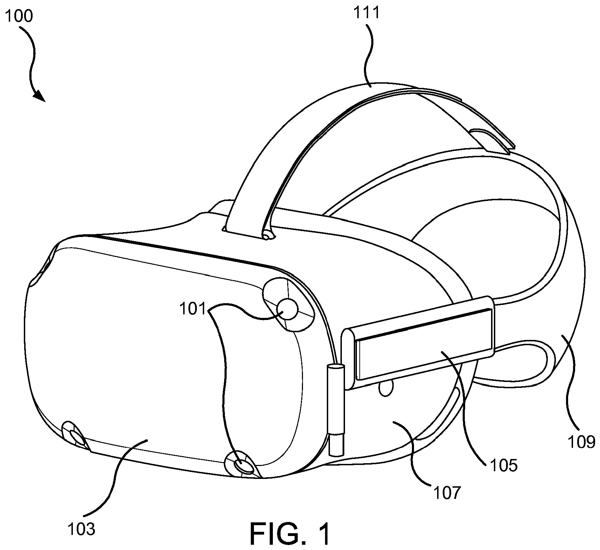

FIG. 1 is a perspective view of a HMD 100 according to one embodiment. The HMD 100 may include, among others components, cameras 101, a front cover 103, a head strap connector 105, a side cover 107, and a head strap assembly. The head strap assembly may include a rear strap 109, and an upper strap 111 connected to the rear strap 109. The front cover 103 is attached at the front of the side cover 107. The head strap 109 is attached to the side cover 107 via the head strap connector 105. The upper strap 111 is attached to the head strap 109 and secured by inserting the end of the upper strap 111 into a slot formed in the side body. The front cover 103 covers a front side of the side cover 107. The components and the structure of HMD 100 as illustrated in FIG. 1 are merely illustrative.

The front cover 103 is a rigid member placed at the front part of the HMD 100 to protect components in the HMD 100. In one embodiment, the front cover 103 is secured to the side cover 107 via screws or other fastening mechanism that enables the front cover 103 to be removed from the side cover 107 for maintenance purposes. The front cover has two cameras 101 at upper two corners and bottom two edges. These cameras 101 can be used to capture views outside of the HMD 100, and display them to the user.

The head strap 109 and upper strap 111 wrap around a user's head to fasten the HMD 100 to the user's face. The head strap 109 and the upper strap 111 may be made of elastic, fabric or a combination thereof to be flexible yet comfortable for the user. The head strap 109 is connected to the side cover 107 of the HMD 100 by the head strap connector 105 which can rotate in relation to the side cover 107. Additionally, the head strap connector 105 can disconnect from the side cover 107, enabling a user to replace the head strap 109 or a maintenance technician easier access to the side cover 107. The upper strap 111 provides additional support and is connected to the head strap 109 and the top of the side cover 107.

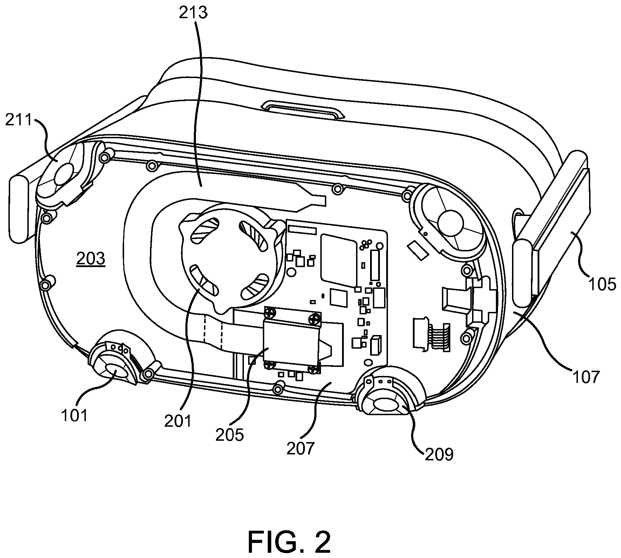

FIG. 2 is a perspective view of a HMD 100 with the front cover 103, head strap 109, and upper strap 111 removed, according to one embodiment. Behind the font cover 103, a fan 201, printed circuit board (PCB) 207, and heat pipe 213 are mounted to a front surface 203 of a metal frame 309. The HMD 100 also includes, a PCB bracket 205, lower brackets 209, and upper brackets 211. The PCB bracket 205 is mounted to the PCB 207 with an end of the heat pipe 213 placed between the PCB bracket 205 and the PCB 207. The lower brackets 209 and upper brackets 211 are mounted to the upper two corners and bottom two edges of the metal frame 309. The fan 201, heat pipe 213, and PCB 207 may be mounted to the metal frame 309 via screws or adhesive.

The fan 201 and heat pipe 213 dissipates heat generated by the PCB 207. The fan 201 also pulls air from the rear side of the HMD 100 where the user's face is located and thereby cools the user's face by circulating the air. The fan 201 is received in a hole formed in the metal frame 309.

The PCB bracket 205 is connected to the PCB 207 by screws and prevents the heat pipe from disconnecting from the PCB 207 due to thermal expansion, movement of the HMD 100, or application of an external force. The PCB bracket 205 also presses the end of the heat pipe 213 to a processor (not shown) mounted on the PCB 207 so that the heat generated by the processor can be transferred effectively.

The lower brackets 209 and upper brackets 211 surround at least a portion of the cameras 101 and protects the cameras 101 from external impact. For this purpose, the cameras 101 are located in concaved top surfaces of the brackets 209, 211. In this way, any external impact is likely to be applied to the brackets 209, 211 instead of the cameras 101. The brackets 209, 211 may be secured to the front surface 203 by screws that can be removed for easy access to the cameras 101.

The heat pipe 213 has an end connected to the processor of the PCB 207 while other parts are connected to the front surface 203 of the metal frame 309. The heat pipe 213 transfers to heat to the metal frame 309 which functions as a heat sink for absorbing and dissipating the heat.

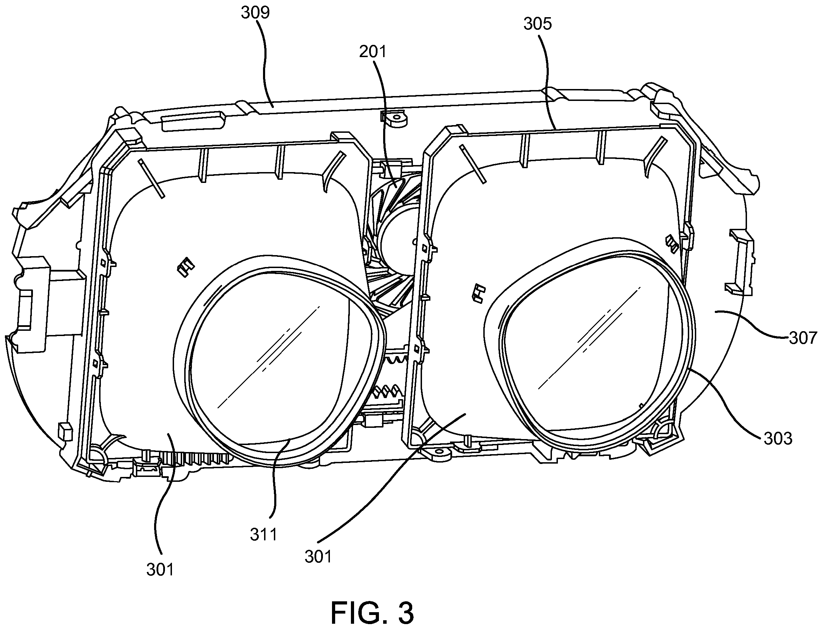

FIG. 3 is a perspective rear view of the metal frame 309 and two display protection shells 301 of the HMD 100, according to one embodiment. The rear surface 307 of the metal frame 309 is at an opposite side from the front surface 203 seen in FIG. 2 . Each display protection shell 301 is mounted to the rear surface 307 of the metal frame 309 with a display panel assembly 311 between the display protection shell 301 and the rear surface 307.

Each display protection shell 301 includes a front end 305 and a rear end 303. The display protection shell 301 also encloses optical elements (not shown) for guiding light from the display panel assembly 311 to the user's eyes. To enclose the optical elements and guide the light to the user's eyes, each of the display protection shells 301 may have a frustum shape.

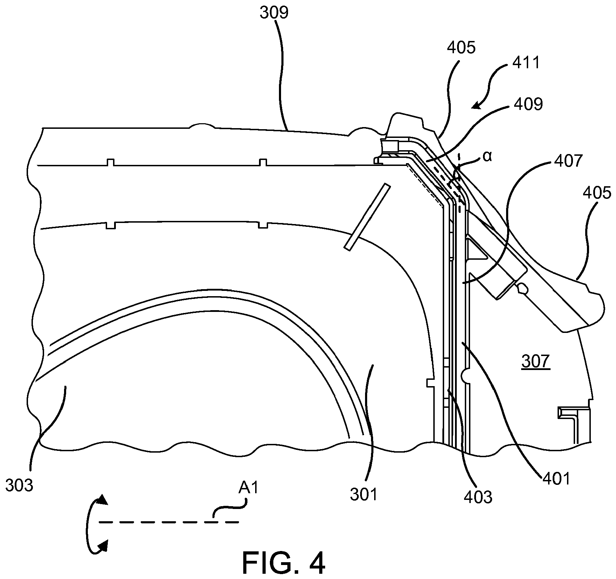

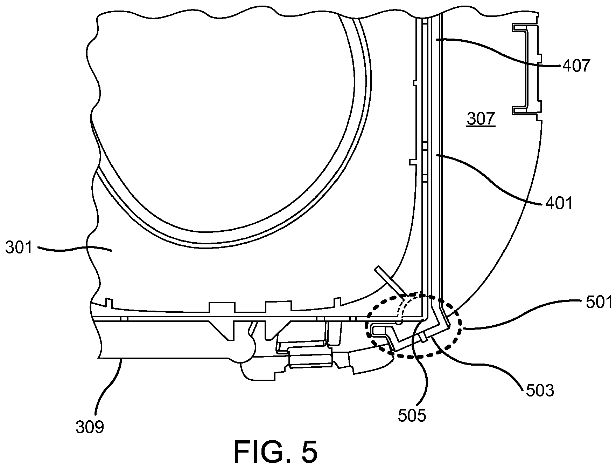

The metal frame 309 provides structural support to the HMD 100. When the HMD 100 is subject to external impact (e.g., dropping of the HMD 100), the metal frame 309 functions as an internal support that prevents side covers 107 from collapsing. The metal frame 309 also includes walls and pockets to protect the display panel assembly 311 and the display protection shell, as described below in detail with reference to FIGs. 4 and 5 . The metal frame 309 also serves as a platform onto which other components of the HMD 100 such as the fan 201 and the PCB 207 can be mounted. The metal frame may have a generally straight upper and lower edges while the right end left edges are generally semicircular. The metal frame 309 also functions as a heat sink that dissipates heat generated by the PCB 207, as described above with reference to FIG. 2 .

The display panel assembly 311 displays images to the user. These images can include images of the surrounding environment captured by the cameras 101. These images can also include augmented objects that appear to interact with the surrounding environment.

FIG. 4 is an enlarged view of the top rear corner of the metal frame 309 and display protection shell 301 of the HMD 100, according to one embodiment. The rear surface 307 has a wall 401 that protrudes rearward and extends parallel to an edge 403 of the display protection shell 301. The upper corner 411 of the metal frame 309 is cut out diagonally and includes a flap 405 for mounting the upper brackets 211.

The wall 401 is spaced apart from the edge 403 of the display protection shell 301. Providing the wall 401 on the metal frame 309 is advantageous, among other reasons, because it absorbs impact and external force, and it increases the rigidity of the metal frame 309. If an external force is applied to the HMD 100 (such as the user dropping it on the ground), the space between the wall 401 of the metal frame 309 and the edge 403 of the display protection shell 301 allows the metal frame 309 to absorb the external force or impact by deforming or bending without damaging the display protection shell 301 or display panel assembly 311. The wall 401 also increases the rigidity of the metal frame 309 against bending about axis A1 because the area of momentum of the metal frame 309 is increased by the presence of the wall 401.

The wall 401 includes a first segment 407 and a second segment 409 that intersects at an angle a. The metal frame 309 has a cut-out section at the upper corners 411, and hence, the wall 401 is bent inward at the upper corners to accommodate the cut-out section. In one embodiment, the second segment 409 extends generally parallel to the cut out surface of the metal frame 309 at the corner 411. The first segment 407 and second segment 409 meet at an angle α to allow the metal frame 309 to be cut at the diagonal direction and include the flap 405 in the upper corner 411 which houses a camera 101. When the impact is applied to the upper corner of the HMD 100 via the upper bracket 211, for example, the second segment 409 absorbs the impact by deforming or bending. The cut-out section may include a hole (not shown) for receiving a screw that secures the upper bracket 211 to the metal frame 309.

In one embodiment, the wall 401 is formed integrally with the other parts of the metal frame 309. In other embodiments, the wall 401 may be formed separately from other parts of the metal frame 309 and be attached to it via adhesive or other securing mechanism.

FIG. 5 is an enlarged view of the bottom rear corner of the metal frame 309 and the display protection shell 301 of the HMD 100, according to one embodiment. As illustrated in FIG. 5 , in addition to the first segment 407 and second segment 409, the wall 401 may further include a third segment 503 which forms a pocket 501 to receive a corner 505 of the display protection shell 301 and/or a corner of the display panel assembly 311.

The pocket 501 formed by the third segment 503 of the wall 401 allows further protection against external force or impact upon the HMD 100 by allowing the metal frame to deform or bend without damaging or displacing the display protection shell 301 and/or the display panel assembly 311.

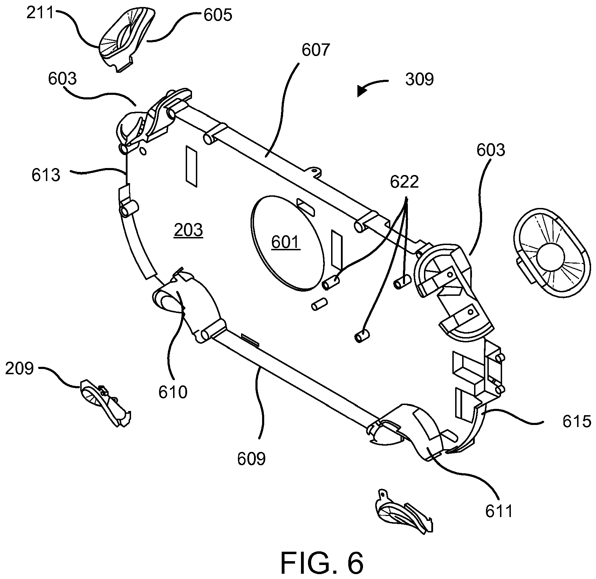

FIG. 6 is an exploded perspective view of the metal frame 309 of the HMD 100, according to one embodiment. As seen in FIG. 6 , the metal frame 309 may include, among other features, an opening 601, diagonal cut-out parts 603, a top edge 607, a bottom edge 609, bosses 622, and semi-circular side walls 613, 615. Semi-cylindrical walls 610 611 are provided at the bottom edge 609.

The opening 601 in the metal frame 309 is dimensioned to receive the fan 201, as described above with reference to FIG. 2 .

As previously discussed, bracket 211 and bracket 209 are attached to the metal frame 309 to secure cameras 101. Specifically, bracket 211 is attached to a diagonal cut-out part 603 comprising a flap 405 having a top contour that matches a bottom contour 605 of bracket 211. Additionally, each of the bottom brackets 209 is attached to a semi-cylindrical wall 610, 611 at the bottom edge 609 of the metal frame 309.

The bosses 622 are provided on the front surfaces of the metal frame 309 to receive screws for fixing components such as the PCB 207 onto the metal frame 309.

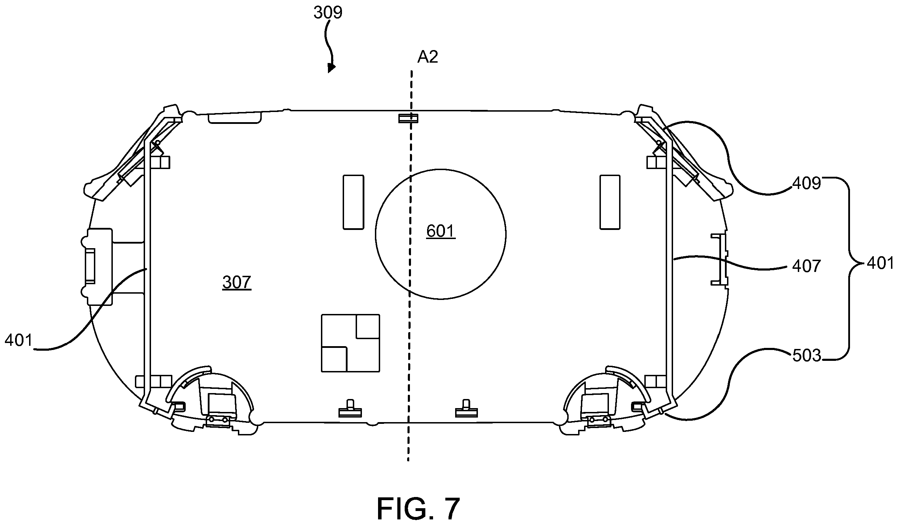

FIG. 7 is a rear view of the metal frame 309 of the HMD 100 according to one embodiment. As illustrated in FIG. 7 , the walls 401 are provided at the left side as well as the right side of the HMD 100. The metal frame 309 also has a generally a symmetric shape across axis A2.

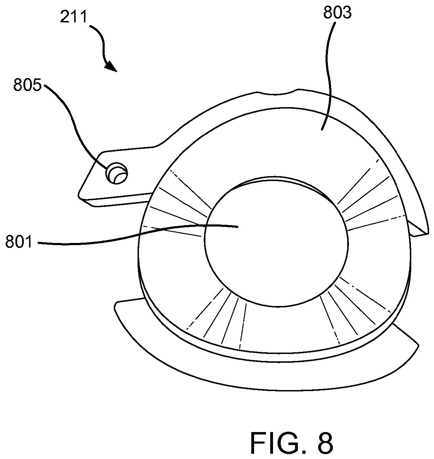

FIG. 8 is a perspective diagram of the upper bracket 211 for protecting a camera 101, according to one embodiment. The upper bracket 211 may include, among other features, a washer plate 803 formed with a circular hole 801 and a screw hole 805.

The camera 101 will be housed within the circular hole 801 and constrained by the washer plate 803 of the bracket. The washer plate 803 has a profile that matches with the upper profile of the cut-out section, including the flaps 405. The screw hole 805 allows the passage of a screw to secure the bracket 209 to the metal frame 309.

The lower bracket 209 has a similar structure as the upper bracket 211, and the detailed description thereof is omitted herein for the sake of brevity.

The foregoing description of the embodiments of the disclosure has been presented for the purpose of illustration; it is not intended to be exhaustive or to limit the disclosure to the precise forms disclosed. Persons skilled in the relevant art can appreciate that many modifications and variations are possible in light of the above disclosure.

## Claims

1. A head-mounted display (100), comprising:
a display protection shell (301) having a rear end (303) open toward a rear part of the head-mounted display (100) and a front end (305) configured to attach a display panel assembly (311), wherein the front end (305) of the display protection shell (301) has at least one corner (505), and wherein a portion of the display protection shell (301) has a frustum shape; and
a metal frame (309) comprising:
a front surface (203),
a rear surface (307) at an opposite side of the front surface (203), the display panel assembly (311) placed between the front end (305) of the display protection shell (301) and the rear surface (307), and
a wall (401) raised from the rear surface (307), the wall (401) spaced apart from and extending along at least an edge (403) of the display protection shell (301) to protect the display protection shell (301), wherein the at least one corner (505) of the display protection shell (301) has perpendicular edges, and wherein the wall (401) has a segment (503) angled and conjoined to form a pocket (501) for receiving the at least one corner (505) of the display protection shell (301), and
wherein the wall (401) is spaced apart from and extends between an upper corner (411) to the at least one corner (505) of the display protection shell (301),
wherein the upper corner (411) of the display protection shell (301) is cut out in a diagonal direction, and wherein the wall (401) includes a first segment (407) extending straight along the edge (403) of the display protection shell (301) and a second segment (409) connected to the first segment (407), the second segment (409) curved relative to the first segment (407) at an angle (α).

2. The head-mounted display (100) of claim 1, further comprising a bracket (211) attached to a cut-out part at the upper corner (411) of the metal frame (309), the bracket (211) configured to surround at least a portion of a camera (101).

3. The head-mounted display (100) of claim 2, wherein the cut-out part of the metal frame (309) has a flap (405) having a top contour that matches a bottom contour (605) of the bracket (211); and/or
optionally wherein the bracket (211) has a circular hole (801) at a center through which the camera (101) captures views; and/or
optionally further comprising another bracket (209) attached to an edge (609) of the metal frame (309), the other bracket (209) configured to surround at least a portion of another camera (101); and/or
optionally wherein the metal frame (309) comprises a semi-cylindrical wall (610, 611) at the edge (609) to receive the other camera (101) between the semi-cylindrical wall (610, 611) and the other bracket (209).

4. The head-mounted display (100) of any of claims 1 to 3, further comprising a cooling fan (201), and wherein the metal frame (309) has an opening (601) for receiving the cooling fan (201).

5. The head-mounted display (100) of any of claims 1 to 4, wherein the metal frame (309) is made of magnesium.

## Patentansprüche

1. Eine kopfmontierte Anzeige (100), die Folgendes beinhaltet:
eine Anzeigenschutzumhüllung (301), die ein hinteres Ende (303), das zu einem hinteren Teil der kopfmontierten Anzeige (100) hin offen ist, und ein vorderes Ende (305), das konfiguriert ist, um daran eine Anzeigefeldbaugruppe (311) zu befestigen, aufweist, wobei das vordere Ende (305) der Anzeigenschutzumhüllung (301) mindestens eine Ecke (505) aufweist und wobei ein Abschnitt der Anzeigenschutzumhüllung (301) eine Kegelstumpfform aufweist; und
einen Metallrahmen (309), der Folgendes beinhaltet:
eine vordere Oberfläche (203),
eine hintere Oberfläche (307) auf einer entgegengesetzten Seite der vorderen Oberfläche (203), wobei die Anzeigefeldbaugruppe (311) zwischen das vordere Ende (305) der Anzeigenschutzumhüllung (301) und die hintere Oberfläche (307) platziert ist, und
eine Wand (401), die von der hinteren Oberfläche (307) vorsteht, wobei die Wand (401) von mindestens einem Rand (403) der Anzeigenschutzumhüllung (301) beabstandet ist und sich daran entlang erstreckt, um die Anzeigenschutzumhüllung (301) zu schützen,
wobei die mindestens eine Ecke (505) der Anzeigenschutzumhüllung (301) senkrechte Ränder aufweist und wobei die Wand (401) ein Segment (503) aufweist, das abgewinkelt und verbunden ist, um eine Tasche (501) zum Aufnehmen der mindestens einen Ecke (505) der Anzeigenschutzumhüllung (301) zu bilden, und
wobei die Wand (401) von einer oberen Ecke (411) beabstandet ist und sich zwischen dieser zu der mindestens einen Ecke (505) der Anzeigenschutzumhüllung (301) erstreckt,
wobei die obere Ecke (411) der Anzeigenschutzumhüllung (301) in einer diagonalen Richtung ausgeschnitten ist und wobei die Wand (401) ein erstes Segment (407), das sich entlang dem Rand (403) der Anzeigenschutzumhüllung (301) gerade erstreckt, und
ein zweites Segment (409), das mit dem ersten Segment (407) zusammengefügt ist, umfasst, wobei das zweite Segment (409) in Bezug auf das erste Segment (407) in einem Winkel (α) gekrümmt ist.

2. Kopfmontierte Anzeige (100) gemäß Anspruch 1, die ferner eine Halterung (211) beinhaltet, welche an einem ausgeschnittenen Teil an der oberen Ecke (411) des Metallrahmens (309) befestigt ist, wobei die Halterung (211) konfiguriert ist, um mindestens einen Abschnitt einer Kamera (101) zu umgeben.

3. Kopfmontierte Anzeige (100) gemäß Anspruch 2, wobei der ausgeschnittene Teil des Metallrahmens (309) eine Lasche (405) aufweist, welche eine obere Kontur, die mit einer unteren Kontur (605) der Halterung (211) zusammenpasst, aufweist; und/oder
wobei optional die Halterung (211) ein kreisförmiges Loch (801) in einer Mitte aufweist, durch welches die Kamera (101) Ansichten aufnimmt; und/oder
das ferner optional eine weitere Halterung (209) beinhaltet, welche an einem Rand (609) des Metallrahmens (309) befestigt ist, wobei die weitere Halterung (209) konfiguriert ist, um mindestens einen Abschnitt einer weiteren Kamera (101) zu umgeben; und/oder
wobei optional der Metallrahmen (309) an dem Rand (609) eine halbzylinderförmige Wand (610, 611) beinhaltet, um die weitere Kamera (101) zwischen der halbzylinderförmigen Wand (610, 611) und der weiteren Halterung (209) aufzunehmen.

4. Kopfmontierte Anzeige (100) gemäß einem der Ansprüche 1 bis 3, die ferner ein Kühlgebläse (201) beinhaltet, und wobei der Metallrahmen (309) eine Öffnung (601) zum Aufnehmen des Kühlgebläses (201) aufweist.

5. Kopfmontierte Anzeige (100) gemäß einem der Ansprüche 1 bis 4, wobei der Metallrahmen (309) aus Magnesium gefertigt ist.

## Revendications

1. Un dispositif d'affichage monté sur la tête (100), comprenant :
une coque de protection d'affichage (301) ayant une extrémité arrière (303) ouverte vers une partie arrière du dispositif d'affichage monté sur la tête (100) et une extrémité avant (305) configurée pour fixer un ensemble formant panneau d'affichage (311), où l'extrémité avant (305) de la coque de protection d'affichage (301) a au moins un coin (505), et où une portion de la coque de protection d'affichage (301) a une conformation de pyramide tronquée ; et
un cadre métallique (309) comprenant :
une surface avant (203),
une surface arrière (307) au niveau d'un côté opposé de la surface avant (203),
l'ensemble formant panneau d'affichage (311) étant placé entre l'extrémité avant (305) de la coque de protection d'affichage (301) et la surface arrière (307), et
une paroi (401) surélevée depuis la surface arrière (307), la paroi (401) étant espacée de et s'étendant le long d'au moins un bord (403) de la coque de protection d'affichage (301) afin de protéger la coque de protection d'affichage (301), où l'au moins un coin (505) de la coque de protection d'affichage (301) a des bords perpendiculaires, et où la paroi (401) a un segment (503) en angle et conjoint afin de former une poche (501) pour recevoir l'au moins un coin (505) de la coque de protection d'affichage (301), et
où la paroi (401) est espacée de et s'étend entre un coin supérieur (411) jusqu'à l'au moins un coin (505) de la coque de protection d'affichage (301),
où le coin supérieur (411) de la coque de protection d'affichage (301) est découpé dans une direction diagonale, et où la paroi (401) inclut un premier segment (407) s'étendant tout droit le long du bord (403) de la coque de protection d'affichage (301) et un deuxième segment (409) raccordé au premier segment (407), le deuxième segment (409) étant incurvé relativement au premier segment (407) à un angle (α).

2. Le dispositif d'affichage monté sur la tête (100) de la revendication 1, comprenant en outre un support (211) fixé à une partie découpée au niveau du coin supérieur (411) du cadre métallique (309), le support (211) étant configuré pour entourer au moins une portion d'une caméra (101).

3. Le dispositif d'affichage monté sur la tête (100) de la revendication 2, où la partie découpée du cadre métallique (309) a une patte (405) ayant un contour de dessus qui correspond à un contour de dessous (605) du support (211) ; et/ou
facultativement où le support (211) a un trou circulaire (801) au niveau d'un centre à travers lequel la caméra (101) capture des vues ; et/ou
facultativement comprenant en outre un autre support (209) fixé à un bord (609) du cadre métallique (309), l'autre support (209) étant configuré pour entourer au moins une portion d'une autre caméra (101) ; et/ou
facultativement où le cadre métallique (309) comprend une paroi semi-cylindrique (610, 611) au niveau du bord (609) afin de recevoir l'autre caméra (101) entre la paroi semi-cylindrique (610, 611) et l'autre support (209).

4. Le dispositif d'affichage monté sur la tête (100) de n'importe lesquelles des revendications 1 à 3, comprenant en outre un ventilateur (201), et où le cadre métallique (309) a une ouverture (601) pour recevoir le ventilateur (201).

5. Le dispositif d'affichage monté sur la tête (100) de n'importe lesquelles des revendications 1 à 4, où le cadre métallique (309) est réalisé en magnésium.
